# EUROPEAN PATENT APPLICATION

(11) **EP 1 563 874 A1**
(43) Date of publication of application: **17.08.2005**
(21) Application number: 04022185.5
(22) Date of filing: 17.09.2004
(51) Int. Cl.: A63B 37/00

(54) **High velocity golf ball**

(30) Priority: 17.02.2004 US 780005
(71) Applicant: WILSON SPORTING GOODS COMPANY, Chicago Illinois 60631 (US)
(72) Inventor: Simonutti, Frank M., Jackson, TN 38305 (US); Thurman, Robert T., Jackson, TN 38305 (US)
(74) Representative: Spitz, Volker

(57) **Abstract**

Golf balls in accordance with the principles of the present invention exhibit exceptional performance properties and have a high velocity when struck by a driver. A golf ball of the present invention comprises a core, a mantle, and a cover layer. The core is formed of a polybutadiene compound. The mantle is comprised a terpolymers. The cover layer is formed of a composition of one or more ionomers.

## Description

### CROSS REFERENCE TO RELATED APPLICATIONS

This application is a continuation-in-part of U.S. Patent Application No. 10/226,032 entitled "Multilayered Balanced Golf Ball" by Simonutti and Bradley and incorporated herein by reference.

### FIELD OF THE INVENTION

The present invention relates to the field of golf balls.

### BACKGROUND OF THE INVENTION

The golf club/ball impact can best be described as a violent collision. The typical professional can swing a 200 to 300 gram (7.06 to 10.6 ounce) driver and attain club speeds at the moment of impact of 105 mph (169 km/h) to 115 mph (185 km/h) striking a 46 gram (1.62 ounces) golf ball resting on a tee. One side of the golf ball is smashed against the face of the club which can result in the balls of the prior art compressing nearly 20% before the golf ball leaves the tee. The golf ball then accelerates from rest to speeds of approximately 230 to 240 ft/s and spin rates of 2000 to 4000 rpm's in less than half a millisecond, experiencing 50,000 times

For a great number of years, golf balls were molded using wound cores, which comprised a soft rubber center surrounded by a layer of thread rubber windings. In the late 1960s to early 1970s, balls with ionomer covers (produced by E.I. du Pont de Nemours and Company, 1007 Market ST Wilmington, Delaware 19898 ("DuPont") under the trade name Surlyn®) were introduced. Balls molded with Surlyn® covers were produced with both thread wound cores and solid rubber cores. The balls molded using initial grades of Surlyn® and solid cores (hereafter referred to as "two-piece balls") were significantly less expensive to produce; however, the initial two-piece golf balls were hard, having an unpleasant feel to the golfer.

Recently, the introduction of the multi-piece solid ball has been a success with products such as the Titleist® Pro V1 (produced by Fortune Brands, Inc. 300 Tower Parkway, Lincolnshire, Illinois 60069), the Precept® Tour Premium (produced by Bridgestone Sports Co., LTD., Omori Bellport E Bldg. 6-22-7, Minami-oi Shinagawa-ku, Tokyo 140-0013 Japan), and the Wilson Staff® True Tour Elite Velocity™ (Wilson Sporting Goods Co. ("Wilson"), 8700 West Bryn Mawr Avenue, Chicago, Illinois 60631). These golf balls, while being solid and not wound, have polyurethane covers that lend themselves to the shot making qualities that are possessed by the balls preferred by the better golfers. The golf balls are also less expensive to produce.

The United States Golf Association (U.S.G.A.) has specific requirements for golf ball performance. These requirements are designed to limit the performance of the golf ball. The currently proscribed requirements for a golf ball to be listed for play in a U.S.G.A. sanctioned event include a maximum weight of 1.62 oz. (45.93 grams), a minimum diameter of 1.68 in (42.67mm), a maximum initial velocity when tested by the U.S.G.A. of 250 ft/s + 2%, or 255 ft/s (77.7 m/s), and a maximum flight distance of 280 yds + 6% roll, or 296.8 yards.

Some prior art balls circumvent the requirements of the U.S.G.A. The Condor (manufactured by Condor Golf, 26009 N. 7^{th} Ave., Phoenix, Arizona 85027), for example, is a two-piece golf ball that is made to a smaller diameter (about 1.64 in) and a higher weight of about 1.66 oz to 1.69 oz (about 47-48 grams) than specified by the U.S.G.A. The desired result of this ball is to provide increased distance compared to U.S.G.A. conforming golf balls. Despite the claims of improved distance, only a small increase in the overall distance of the golf ball off the driver club (about 3 yards to 4 yards) has been observed. Further, the need for increasing the density of the core to provide the desired ball weight results in use of a high level of inert fillers. The use of these fillers results in a decrease of the initial velocity of the ball off the driver, which is detrimental to the overall distance performance of the golf ball.

It is also possible to create a golf ball with size and weight parameters outside of those specified by the U.S.G.A., with minimal loss in initial velocity properties. The use of high-density filler, such as tungsten, can limit the decrease in initial velocity properties observed by increasing the ball weight; however, this increase in initial velocity (off the driver) is minimal and resultant distance increase compared to a ball made with a core filled with lower density filler (such as but not limited to barium sulfate) is minimal.

Thus, there is a need for a golf ball that is economical to produce with known manufacturing equipment and provides exceptional initial velocity and exceptional distance properties. More particularly, there is a need for golf ball that performs well and is made of highly workable material.

### SUMMARY OF THE INVENTION

A golf ball in accordance with the principles of the present invention is economical to produce with known manufacturing equipment and provides exceptional initial velocity properties when struck with a Driver club. One aspect of the present invention relates to an at least three piece golf ball that performs well and has a high velocity when struck by a driver. In accordance with the principles of the present invention, the golf ball has a core, a mantle and a cover layer.

### BRIEF DESCRIPTION OF THE DRAWINGS

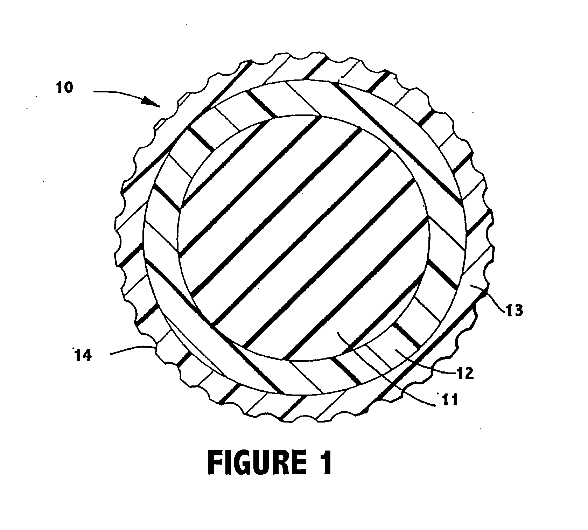

Figure 1 illustrates a cross-section of a golf ball in accordance with the principles of the present invention.

### DETAILED DESCRIPTION OF THE INVENTION

One aspect of the present invention relates to a three-piece (or greater) solid golf ball. Figure 1 illustrates a three-piece golf ball having a core or center 11, a mantle or intermediate layer 12, and a cover layer 13. The core 11 is formed of a polybutadiene compound filled with a high-density filler. The mantle 12 is molded around the polybutadiene core 11 using newly developed co- or terpolymers manufactured by DuPont, under the tradename DuPont HPF®. These new terpolymers are comprised of ethylene, acrylic acid, and in one embodiment, n-butyl-acrylate. Preferably 100% of the terpolymers' acid groups are neutralized with metal ions, allowing the golf ball 10 to exhibit improved initial velocity and distance performance properties. A golf ball cover 13 in accordance with the principles of the present invention is comprised of a composition of one or more ionomers. The cover 13 preferably has a Shore D hardness of greater than about 70.

The construction of a golf ball 10 in accordance with the present invention is such that improved initial velocity and flight performance can be achieved over a large range of ball diameters. Therefore, the ball can have a diameter of between about 1.620 in (4.11 cm) and about 1.685 in (4.28 cm). The ball construction of the present invention is such that the exceptional initial velocity and flight properties can also be achieved over a large weight range. Therefore, the ball can have a weight of between about 1.57 oz (44.5 g) and about 1.71 oz (48.5 g).

More specifically, the polybutadiene-based center 11 is comprised of a high cis-content polybutadiene rubber, a co-crosslinking agent, a free radical initiator, and fillers as necessary to provide acceptable density. The cis-1,4 content of the polybutadiene should preferably be greater than about 94%. Due to the need for a high initial velocity and high-impact resilience properties, it is preferred that the rubber be synthesized using a neodymium catalyst. However, other catalysts such as but not limited to Cobalt and Nickel may be used. Polybutadiene materials made using a Neodymium catalyst and suitable for use in the invention include, but are not limited to, Enichem Europrene 40 (available from Enichem, 07046 Porto Torres, Sassari, Italy), Enichem Europrene 60 (also available from Enichem), Karbochem Neodene 40 (available from Karbochem, a Division of Sentrachem Ltd, P O Box 98881, Sloane Park 2152, South Africa), Karbochem Neodene 60 (also available from Karbochem), and Firestone 140 ND (available from Firestone Polymers LLC, 381 W. Wilbeth Road Akron, Ohio).

The co-crosslinking agent may be any suitable agent known in the art such as metal salts of acrylate esters. The co-crosslinking agent is preferably a zinc salt of an unsaturated acrylate ester. Zinc diacrylate is the preferred zinc salt. Further, a level of fatty acid salt of up to 12% of the total of the zinc diacrylate and fatty acid salt is preferred. A level of ~ 7 to 10% of a fatty acid salt such as Zinc Stearate or Zinc Palmatate is preferred.

Any free radical initiator known in the art may be utilized, including but not limited to peroxides. The free radical initiator that is preferred for the invention is peroxide. Peroxides such as but not limited to dicumyl peroxide, tert-Butyl peroxybenzoate, Butyl 4,4'-di-(tert-butylperoxy) valerate, and 1,1-Di-(tert-butylperoxy)-3,3,5-trimethylcyclohexane are suitable for use. 1,1-Di-(tert-butylperoxy)-3,3,5-trimethylcyclohexane (sold by Akzo Nobel Inc., 525 West Van Buren Street, Chicago Illinois 60607, under the tradename Triganox® 29/40) is most preferred for use in the center 11 compound.

In another embodiment, the golf ball 10 of the present invention includes fillers. High-density fillers are preferred to provide the resilience properties required for the invention. Preferably, such high-density fillers include but are not limited to tungsten and zinc oxide.

The mantle 12 may be formed from a co-polymer of ethylene and an α, β-unsaturated carboxylic acid. In another embodiment, the may be formed from a terpolymer of ethylene, an α, β-unsaturated carboxylic acid, and an n-alkyl acrylate. Preferably, the α, β-unsaturated carboxylic acid is acrylic acid. In a preferred embodiment, the n-alkyl acrylate is n-butyl acrylate. Further, in a preferred form, the co- or ter-polymer comprises a level of fatty acid greater than 5 phr of the base resin. The preferred fatty acid is Magnesium Oleate or Magnesium Stearate.

It is highly preferred that the carboxylic acid in the intermediate layer is 100% neutralized with metal ions. The metal ions used to neutralize the carboxylic acid may be any metal ion known in the art. Preferably, the metal ions comprise magnesium ions. If the material used in the intermediate layer is not 100% neutralized, the resultant resilience properties such as Coefficient of Restitution (C.O.R.) and initial velocity will not be sufficient to produce the improved initial velocity and distance properties of the present invention. The C.O.R is a measurement of the ability of the face of the golf club to rebound the golf ball, expressed as a percentage that is determined by the speed of the golf ball 10 off the club head divided by the speed at which the ball is struck by the club head.

The mantle 12 can comprise various levels of the three components of the co- or terpolymer as follows: from about 60 to about 90% ethylene, from about 8 to about 20% by weight of the α, β-unsaturated carboxylic acid, and from 0% to about 25% of the n-alkyl acrylate. The co- or terpolymer may also contain an amount of a fatty acid salt. The fatty acid salt preferably comprises magnesium oleate. These materials are commercially available from DuPont, under the tradename DuPont HPF.

In one embodiment, the mantle 12 comprises a copolymer of about 81% by weight ethylene and about 19% by weight acrylic acid, wherein 100% of the carboxylic acid groups are neutralized with magnesium ions. The copolymer also contains at least 5 phr of magnesium oleate. Material suitable for use as this layer is available from DuPont under the tradename DuPont HPF SEP 1313-4.

In a second preferred embodiment, the mantle 12 comprises a copolymer of about 85% by weight ethylene and about 15% by weight acrylic acid, wherein 100% of the acid groups are neutralized with magnesium ions. The copolymer also contains at least 5 phr of magnesium oleate. Material suitable for use as this layer is available from DuPont under the tradename DuPont HPF SEP 1313-3.

In a third preferred embodiment, the mantle 12 comprises a copolymer of about 88% by weight ethylene and about 12% by weight acrylic acid, wherein 100% of the acid groups are neutralized with magnesium ions. The copolymer also contains at least 5 phr of magnesium oleate. Material suitable for use as this layer is available from DuPont under the tradename DuPont HPF AD1027.

In a further preferred embodiment, the mantle 12 is adjusted to a target specific gravity to enable the ball to be balanced. For a 1.68 inch (4.27 cm) diameter golf ball having a ball weight of about 1.61 oz (45.5 g), the target specific gravity is about 1.125. It will be appreciated by one of ordinary skill in the art that the target specific gravity will vary based upon the size and weight of the golf ball. The specific gravity is adjusted to the desired target through the use of inorganic fillers. Preferred fillers used for compounding the inner layer to the desired specific gravity include, but are not limited to, tungsten, zinc oxide, barium sulfate and titanium dioxide.

The cover layer 13 is formed from an ionomer or blend of two or more ionomers. To produce the improved initial velocity and distance properties of the present invention, the cover should preferably have a Shore D hardness of greater than about 70, as measured on the curved surface of the molded golf ball. It will be appreciated by one of ordinary skill in the art that the cover layer 13 may be comprised of one or more separate layers, which may have differing compositions and properties so as to maximize the desired qualities of the golf ball 10 of the present invention.

In a preferred embodiment, the outer cover layer 13 will comprise a blend of: a) about 40 to about 60 % by weight of a copolymer of about 81% ethylene and about 19% methacrylic acid, wherein about 50% of the acid groups are neutralized with sodium ions, and b) about 60% to about 40% by weight of a copolymer of about 81% by weight ethylene and about 19% by weight methacrylic acid, wherein about 50% to about 70% of the acid groups are neutralized with magnesium or zinc ions. The cover preferably has a Shore D hardness, as measured on the curved surface of the golf ball, of about 72.

In further preferred embodiments, the cover layer 13 described above is adjusted to a specific gravity to enable the ball to be "balanced". For example, a 1.68 inch (4.27 cm) diameter golf ball 10 having a weight of about 45.5 grams (1.61 oz) preferably has a specific gravity of about 1.125. The golf ball 10 of the present invention may be compounded using inert fillers to adjust the density with minimal effect on the performance properties of the cover layer. Preferred fillers used for compounding the cover layer 13 to the desired specific gravity include, but are not limited to, zinc oxide, barium sulfate and titanium dioxide.

To maximize the initial velocity and distance performance of the golf ball, it may be desirable to adjust the diameter or weight of the ball to levels outside of U.S.G.A. specifications. For example, distance performance generally increases as the diameter of the golf ball 10 decreases. In some cases, distance performance will also increase as the ball weight increases. It is therefore possible in accordance with the present invention to adjust the size and weight such that initial velocity properties are not detrimentally effected and distance performance can be maximized. The size of the ball of the present invention can be from about 1.62 inches (4.11 cm) to about 1.685 inches (4.28 cm). The weight of the golf ball 10 of the present invention can be from about 45 grams (1.59 oz) to about 48.25 grams (1.70 oz).

In one embodiment, the ball may be balanced. A balanced ball does not depart from its intended flight or roll path due to an off-center core or outer layers of inconsistent thickness. In accordance with the principles of the present invention the ball would have a core, mantle, inner and outer cover layer 13 that are of uniform density without any uneven areas of distribution. This can be accomplished by blending essentially nonreactive materials with the particular components of the golf ball. Thus, a truly balanced ball in accordance with the principles of the present invention has a uniform density. Materials suitable for use in adjusting the density of the component parts can be chosen from the group consisting of inorganic materials, organic materials, and combinations thereof. Preferred inorganic fillers comprise zinc oxide, barium sulfate, titanium dioxide, or a combination thereof.

An unbalanced ball will generally have a light spot and a heavy spot. When an unbalanced ball is repeatedly spun in a salt water solution of the float test described below, the ball will tend to consistently orient itself in the solution with its light spot up and its heavy spot down. The "float" test is performed by filling a container with warm water. A salt, such as sodium chloride, is then added to the solution in sufficient amount to enable one or more golf balls to float in the solution. Preferably, a few drops of detergent are added to the container. The ball is spun and when the ball stops spinning in water, then the top is marked. The spinning is repeated to determine if the same portion will again be at the top when the ball stops. A balanced ball would exhibit no orientational preference when placed in a salt bath of equivalent density.

In a preferred embodiment, the cover layer 13 is adjusted to a target specific gravity of about 1.125 using inert fillers. In a preferred embodiment of the present invention, the core, mantle, mantle 12 and outer cover layer 13 all have a specific gravity of between about 1.118 and about 1.132, with the golf ball 10 preferably having a specific gravity of about 1.125. For a golf ball 10 having a diameter of about 1.68 inches (4.27 cm), a desired specific gravity of about 1.125 is preferred.

The balls made according to the invention produce improved initial velocity and distance properties. The golf balls in accordance with the present invention provide superior properties when compared to conventional two-piece distance balls. Further, the initial velocity properties produced by golf balls of the invention are superior to the previous examples of "non-conforming" or non-U.S.G.A. regulation two-piece golf balls.

### Examples:

The golf balls of the Examples were made as set forth below. Cores for the invention were mixed according to the formulas specified in Table 1. As example balls were made to three different diameters, a different center 11 weight was required for each golf ball 10 diameter evaluated to provide acceptable weight golf balls. The target golf ball weight for each ball diameter was 45 - 46 grams. Three different center 11 formulations were used, designated H, M, and L.

**Table 1:**

| Center Formula | | | |
|---|---|---|---|
| Material | PHR | | |
| | H | M | L |
| Enichem BR-40 Polybutadiene | 100 | 100 | 100 |
| SR416D Zinc Diacrylate | 27.5 | 27.5 | 27.5 |
| Zinc Oxide | 5 | 5 | 5 |
| Triganox 29/40 | 2.05 | 2.05 | 2.05 |
| Tungsten | 57 | 31 | 7 |

Cores H is formulated for use in a 1.625 in target diameter golf ball. A target uncured specific gravity of this compound is 1.45, to produce a cured specific gravity of about 1.495. Cores M is formulated for use in a 1.650 in target diameter golf ball. A target uncured specific gravity of this compound is 1.27, to produce a cured specific gravity of about 1.305. Cores L is formulated for use in a 1.680 in target diameter golf ball. A target uncured specific gravity of this compound is 1.09, to produce a cured specific gravity of about 1.124. All cores were molded to a diameter of about 1.13 inches. Cores were measured for dead weight deflection (DWD) under a 200 lb. static load using a Wilson Dead Weight Deflection testing machine. The deflection of a test subject golf ball is taken by placing the ball between two round plates which are supported from below by round shafts. A force is then applied forcing the bottom plate to compress the ball into the upper plate, using a lever mechanism. The force applied is a nominal 200 Ibs. The deflection is determined by taking the measured distance between the inside of the two plates at contact and the measured distance between the inside of the two plates at some time after the force is applied. The deflection is calculated by simple difference between the two measurements (Compression = 180 - (DWD*1000)). Centers were also measured for size and weight. Results of center properties were as follows:

**Table 2:**

| Center Properties | | | |
|---|---|---|---|
| Center ID | Size | DWD | Weight |
| H | 1.1388 in | 0.1189 in | 19.55g |
| M | 1.1339 in | 0.1232 in | 16.84g |
| L | 1.1345 in | 0.1325 in | 14.39 in |

Mantles were molded onto each of the experimental centers using DuPont HPF RX-85, Dupont HPF SEP 1313-3, or DuPont HPF SEP 1313-4. These mantles were designated IL-1, IL-2, and IL-3 respectively.
- IL-1) DuPont HPF RX-85 -A copolymer of about 88% ethylene and about 12% acrylic acid, wherein 100% of the acid groups are neutralized with magnesium ions. Further, the copolymer contains a fixed amount of magnesium oleate. This material was compounded to a specific gravity of about 1.125 using tungsten. The Shore D hardness of this material (as measured on the curved surface of the inner cover layer) was about 58 to about 60.
- IL-2) DuPont HPF SEP 1313-3 - A copolymer of about 85% ethylene and about 15% acrylic acid, wherein 100% of the acid groups are neutralized with magnesium ions. Further, the copolymer contains a fixed amount of magnesium oleate. This material was compounded to a specific gravity of about 1.125 using tungsten. The Shore D hardness of this material (as measured on the curved surface of the inner cover layer) was about 58-60.
- IL-3) DuPont HPF SEP 1313-4 - A copolymer of about 81% ethylene and about 19% acrylic acid, wherein 100% of the acid groups are neutralized with magnesium ions. Further, the copolymer contains a fixed amount of magnesium oleate. This material was compounded to a specific gravity of about 1.125 using tungsten. The Shore D hardness of this material (as measured on the curved surface of the inner cover layer) was about 58-60.

Mantles molded onto core 11 formulations H and M - targeted for a molded ball diameter of 1.625 in and 1.65 in, respectively, were glebarred to a diameter of about 1.50 in. Mantles molded onto core 11 formulation L, targeted for a 1.680 in diameter ball, were glebarred to a diameter of about 1.51 in. Mantle properties are as follows:

**Table 3:**

| Mantle Properties | | | | |
|---|---|---|---|---|
| Center ID | Mantle ID | Size | DWD | Weight |
| H | IL-1 | 1.4993 in | 0.0879 in | 37.03g |
| H | IL-2 | 1.4989 in | 0.0910 in | 36.80g |
| H | IL-3 | 1.5004 in | 0.0854 in | 37.15g |
| M | IL-1 | 1.4985 in | 0.0913 in | 34.54g |
| M | IL-2 | 1.4983 in | 0.0927 in | 34.44g |
| M | IL-3 | 1.4960 in | 0.0888 in | 34.62g |
| L | IL-1 | 1.5045 in | 0.0918 in | 32.63g |
| L | IL-2 | 1.5108 in | 0.0932 in | 32.94g |
| L | IL-3 | 1.5112 in | 0.0883 in | 33.25g |

Cover layers were molded onto each of the center/mantle components using a blend of ionomers comprising:
- About 60 by weight of Surlyn 8140, which is a copolymer comprising about 81% ethylene and about 19% methacrylic acid, wherein about 50% of the acid groups are neutralized with sodium ions, and
- About 40% by weight of Surlyn 6120, which is a copolymer comprising about 81% ethylene and about 19% methacrylic acid, wherein about 50% of the acid groups are neutralized with magnesium ions.

This material was compounded to a target specific gravity of about 1.125 using barium sulfate and titanium dioxide. The Shore D hardness of the ionomer blend (as measured on the curved surface of the golf ball) is about 72. Covers were molded onto center/mantle components using a Nissei injection press. All balls tested included dimples 14. All 1.680 in diameter balls molded using Wilson WS-400 dimple pattern that employs 3 different dimple sizes laid out in a rhombicuboctahedron pattern. Example balls having diameter of 1.65 in and 1.625 in were molded using Wilson RT 432 dimple pattern, which is an icosadodecahedron pattern utilizing 8 dimple sizes.

Wilson Staff® True Velocity™ and Wilson "Jack"™ golf balls available from Wilson were evaluated for reference purposes. Results of examples of the present invention are as follows:

**Table 4:**

| Physical Properties of Examples | | | | | | | |
|---|---|---|---|---|---|---|---|
| Example # | Core ID | Mantle ID | Size (in) | DWD (in) | Wt. (g) | C.O.R. 150f/s | C.O.R. 175f/s |
| 1 | H | IL-1 | 1.6264 | 0.0685 | 45.67 | 0.815 | 0.789 |
| 2 | H | IL-2 | 1.6252 | 0.0692 | 45.36 | 0.816 | 0.791 |
| 3 | H | I L-3 | 1.6247 | 0.0670 | 45.60 | 0.820 | 0.794 |
| 4 | M | IL-1 | 1.6504 | 0.0666 | 45.18 | 0.825 | 0.796 |
| 5 | M | I L-2 | 1.6518 | 0.0674 | 45.17 | 0.819 | 0.796 |
| 6 | M | IL-3 | 1.6516 | 0.0648 | 45.34 | 0.824 | 0.799 |
| 7 | L | IL-1 | 1.6804 | 0.0631 | 45.31 | 0.826 | 0.802 |
| 8 | L | IL-2 | 1.6811 | 0.0638 | 45.26 | 0.826 | 0.801 |
| 9 | L | IL-3 | 1.6806 | 0.0614 | 45.44 | 0.826 | 0.803 |
| Staff® True Velocity™ | NA | NA | 1.6819 | 0.1006 | 45.51 | 0.791 | 0.755 |
| Wilson Jack™ | NA | NA | 1.6783 | 0.1031 | 45.54 | 0.787 | 0.752 |
| Where C.O.R. 150 ft/s is the Coefficient of Restitution measured at an inbound test velocity of 150 ft/s, while C.O.R. 175 ft/s is the Coefficient of Restitution measured at an inbound test velocity of 175 ft/s. | | | | | | | |

The golf balls of Examples 1 through 3 all have a diameter of about 1.625 in. These balls all produce a higher C.O.R. than the control two-piece distance golf balls. The golf ball 10 of Example 1 exhibited a C.O.R 0.024 higher at 150 ft/s and 0.034 higher at 175 ft/s when compared to the Staff® True Velocity™. The golf ball 10 of Example 2 exhibited a C.O.R 0.025 higher at 150 ft/s and 0.036 higher at 175 ft/s when compared to the Staff® True Velocity™. The golf ball 10 of Example 3 exhibited a C.O.R 0.029 higher at 150 ft/s and 0.039 higher at 175 ft/s when compared to the Staff® True Velocity™.

The golf balls of Examples 4 through 6 all have a diameter of about 1.650 in. These balls also produce an even higher C.O.R. than the control two-piece distance golf balls. The golf ball 10 of Example 4 exhibited a C.O.R 0.034 higher at 150 ft/s and 0.041 higher at 175 ft/s when compared to the Staff® True Velocity™. The golf ball 10 of Example 5 exhibited a C.O.R 0.028 higher at 150 ft/s and 0.041 higher at 175 ft/s when compared to the Staff® True Velocity™. The golf ball 10 of Example 6 exhibited a C.O.R 0.033 higher at 150 ft/s and 0.044 higher at 175 ft/s when compared to the Staff® True Velocity™.

The golf balls of Examples 7 through 9 all have a diameter of about 1.680 in. These balls also produce an even higher C.O.R. than the control two-piece distance golf balls. The golf ball 10 of Example 7 exhibited a C.O.R 0.035 higher at 150 ft/s and 0.047 higher at 175 ft/s when compared to the Staff® True Velocity™. The golf ball 10 of Example 8 exhibited a C.O.R 0.035 higher at 150 ft/s and 0.046 higher at 175 ft/s when compared to the Staff® True Velocity™. The golf ball 10 of Example 9 exhibited a C.O.R 0.035 higher at 150 ft/s and 0.048 higher at 175 ft/s when compared to the Staff® True Velocity™.

The C.O.R. testing illustrates that as the level of filler present in the golf ball 10 core 11 increases, it has a detrimental effect on the Coefficient of Restitution of the golf ball; however, use of tungsten as the filler material lessens the effect.

Table 5 provides the flight properties of the example balls.

**Table 5:**

| Flight Properties of Examples | | | | | | | |
|---|---|---|---|---|---|---|---|
| Example # | Core ID | Mantle ID | | Carry (yds) | Total (yds) | I.V (ft/s) | Spin (rpm) |
| 1 | H | I L-1 | | 277.5 | 285.1 | 241.4 | 3001 |
| 2 | H | I L-2 | | 276.8 | 284.9 | 241.6 | 2974 |
| 3 | H | IL-3 | | 277.4 | 286.3 | 241.8 | 3014 |
| 4 | M | I L-1 | | 274.7 | 281.7 | 242.7 | 2850 |
| 5 | M | IL-2 | | 274.8 | 280.8 | 242.2 | 2795 |
| 6 | M | IL-3 | | 275.0 | 280.7 | 242.4 | 2869 |
| 7 | L | IL-1 | | 273.7 | 282.3 | 242.3 | 2829 |
| 8 | L | IL-2 | | 273.6 | 280.7 | 242.1 | 2781 |
| 9 | L | IL-3 | | 273.8 | 281.0 | 242.5 | 2791 |
| Staff® True Velocity™ | | | | 263.8 | 272.4 | 234.8 | 2654 |
| Wilson Jack™ | | | | 263.1 | 274.0 | 234.6 | 2614 |
| Where Flight Test Results are an average of 36 data points. Driver testing performed using True Temper testing machine. A Wilson Staff® Titanium Driver™ club was used with a 9.0° loft. Testing performed using clubhead velocity of about 160 ft/s. | | | | | | | |

The golf ball 10 of Example 1 produces a significant increase of about 7 ft/s in initial velocity and an increase of about 13 yd. in carry and total distance compared to Staff® True Velocity™. The golf ball 10 of Example 2 produces a significant increase of about 7 ft/s in initial velocity and an increase of about 13 yd. in carry and total distance compared to Staff® True Velocity™. The golf ball 10 of Example 3 produces a significant increase of about 7 ft/s in initial velocity and an increase of about 13 yd. in carry and total distance compared to Staff® True Velocity™. The golf ball 10 of Example 4 produces a significant increase of about 8 ft/s in initial velocity and an increase of about 11 yd. in carry distance and about 9 yd. in total distance compared to Staff® True Velocity™. The golf ball 10 of Example 5 produces a significant increase of about 8 ft/s in initial velocity and an increase of about 11 yd. in carry distance and about 8 yd. in total distance compared to Staff® True Velocity™. The golf ball 10 of Example 6 produces a significant increase of about 8 ft/s in initial velocity and an increase of about 11 yd. in carry distance and about 8 yd. in total distance compared to Staff® True Velocity™. The golf ball 10 of Example 7 produces a significant increase of about 8 ft/s in initial velocity and an increase of about 10 yd. in carry and total distance compared to Staff® True Velocity™. The golf ball 10 of Example 8 produces a significant increase of about 8 ft/s in initial velocity and an increase of about 10 yd. in carry distance and about 8 yd. in total distance compared to Staff® True Velocity™. The golf ball 10 of Example 9 produces a significant increase of about 8 ft/s in initial velocity and an increase of about 10 yd. in carry distance and about 9 yd. in total distance compared to Staff® True Velocity™.

The results indicate that a golf ball 10 in accordance with the principles of the present invention exhibits an increase in initial velocity and carry distance in comparison to prior art balls such as the Staff® True Velocity™ regardless of the ball size.

It should be understood that various changes and modifications to the preferred embodiments described herein would be apparent to those skilled in the art. Such changes and modifications can be made without departing from the spirit and scope of the present invention and without demising its attendant advantages. It is therefore intended that such changes and modifications be covered by the appended claims.

## Claims

1. A golf ball comprising:
a solid center having a deflection, under an applied static load of 200 Ib., of between about 0.090 inches and about 0.150 inches;
at least one intermediate layer comprised of thermoplastic material; and
a cover layer comprising an ionomer or ionomer blend and having a Shore D hardness, measured on the curved surface of the golf ball, of greater than about 70;
wherein, the golf ball, when struck by a driver club at a clubhead velocity of about 160 feet-per-second, has an initial velocity off the clubhead of greater than about 240 feet-per-second.

2. The golf ball of claim 1, where the golf ball has a coefficient of restitution of greater than about 0.812 at a test velocity of 150 feet-per-second.

3. The golf ball of claim 1, wherein the center has a diameter of less than about 1.25 inches.

4. The golf ball of claim 1, wherein the center has a diameter of less than about 1.125 inches.

5. The golf ball of claim 1, wherein the at least one intermediate layer(s) has a Shore D hardness as measured on the curved outer surface of the at least one intermediate layer, of between about 55 and about 62.

6. The golf ball of claim 1, wherein the at least one intermediate layer comprises a copolymer of ethylene and acrylic acid, wherein about 100% of the acid groups are neutralized with metal ions.

7. The golf ball of claim 6, wherein the at least one intermediate layer further comprises greater than about 5 parts per hundred of a fatty acid salt chosen from the group consisting of magnesium stearate and magnesium oleate.

8. The golf ball of claim 1, wherein the at least one intermediate layer comprises a terpolymer of ethylene, acrylic acid, and n-butyl acrylate, wherein about 100% of the acid groups are neutralized with metal ions.

9. The golf ball of claim 8, wherein the at least one intermediate layer further comprises greater than about 5 parts per hundred of a fatty acid salt chosen from the group consisting of magnesium stearate and magnesium oleate.

10. The golf ball of claim 1, wherein the ball has a diameter of about 1.680 in.

11. The golf ball of claim 1, wherein the core, the at least one intermediate layer, and the cover layer have approximately the same specific gravity.

12. The golf ball of claim 11, wherein the specific gravity of the core, the at least one intermediate layer, and the cover layer is between about 1.115 and about 1.135.

13. The golf ball of claim 1, wherein the ball has a diameter of about 1.650 in.

14. The golf ball of claim 13, wherein the specific gravity of all components is between about 1.175 and about 1.195.

15. The golf ball of claim 1, wherein the ball has a diameter of about 1.620 in.

16. The golf ball of claim 15, wherein the core, the at least one intermediate layer, and the cover layer have approximately the same specific gravity.

17. The golf ball of claim 16, wherein the specific gravity of all components is between about 1.230 and about 1.270.

18. The golf ball of claim 1, wherein the core is adjusted to a desired specific gravity through use of an inert filler.

19. The golf ball of claim 18, wherein the inert filler is chosen from the groups consisting of organic and inorganic materials.

20. The golf ball of claim 19, wherein the inorganic materials are chosen from the groups consisting of metals, metal oxides, metal sulfates, and combinations thereof.

21. The golf ball of claim 1, wherein the at least one intermediate layer is adjusted to a desired specific gravity through use of an inert filler.

22. The golf ball of claim 21, wherein the inert filler is chosen from the groups consisting of organic and inorganic materials.

23. The golf ball of claim 22, wherein the inorganic materials are chosen from the groups consisting of metals, metal oxides, metal sulfates, and combinations thereof.

24. The golf ball of claim 1, wherein the cover layer is adjusted to a desired specific gravity through use of an inert filler.

25. The golf ball of claim 24, wherein the inert filler is chosen from the groups consisting of organic and inorganic materials.

26. The golf ball of claim 25, wherein the inorganic materials are chosen from the groups consisting of metals, metal oxides, metal sulfates, and combinations thereof.

27. The golf ball of claim 1, wherein the golf ball, when rotated in a solution of salt water of sufficient density to support the-ball, exhibits no single preferred orientation.

28. A golf ball comprising:
a core comprising a polybutadiene;
a mantle comprising a thermoplastic material; and
a cover layer comprising an ionomer;
wherein the golf ball exhibits a coefficient of restitution of greater than about 0.77 when struck by a driver club at a club head speed of 175 feet-per-second.

29. The golf ball of claim 28, wherein the golf ball, when struck by a driver club at a clubhead velocity of about 160 ft/s, has an initial velocity off the clubhead of greater than about 238 ft/s.

30. The golf ball of claim 28, wherein the polybutadiene comprise a high cis-1,4 content polybutadiene and the core further comprises about 20 to about 28 parts by weight of a co-crosslinking agent comprised primarily of a zinc salt of an unsaturated acrylate, about 3 to about 5 parts by weight of a metal oxide activator, and about 0.8 to about 1.5 parts per hundred resin of a free radical initiator.

31. The golf ball of claim 28, wherein the core has a diameter of less than about 1.25.

32. The golf ball of claim 28, wherein the thermoplastic material comprises about 70 to about 80% ethylene, about 8 to about 10.5% acrylic acid and about 12 to about 20% n-butyl acrylate.

33. The golf ball of claim 28, wherein the core, the mantle, and the cover layer have approximately the same specific gravity.

34. The golf ball of Claim 33, wherein the specific gravity of the core, the at least one intermediate layer, and the cover layer is between about 1.115 and about 1.135.

35. The golf ball of Claim 28, wherein the ball, when rotated in a solution of salt water of sufficient density to support the ball, exhibits no single preferred orientation.

36. The golf ball of claim 28, wherein the ball has a diameter of about 1.680 in.

37. The golf ball of claim 28, wherein the ball has a diameter of about 1.650 in.

38. The golf ball of claim 37, wherein the specific gravity of all components is between about 1.175 and about 1.195.

39. The golf ball of claim 28, wherein the ball has a diameter of about 1.620 in.

40. The golf ball of claim 39, wherein the specific gravity of all components is between about 1.230 and about 1.270.

41. The golf ball of claim 28, wherein the core is adjusted to a desired specific gravity through use of an inert filler.

42. The golf ball of claim 41, wherein the inorganic materials are chosen from the groups consisting of metals, metal oxides, metal sulfates, and combinations thereof.

43. The golf ball of claim 28, wherein the mantle is adjusted to a desired specific gravity through use of an inert filler.

44. The golf ball of claim 43, wherein the inorganic materials are chosen from the groups consisting of metals, metal oxides, metal sulfates, and combinations thereof.

45. The golf ball of claim 28, wherein the cover layer is adjusted to a desired specific gravity through use of an inert filler.

46. The golf ball of claim 45, wherein the inorganic materials are chosen from the groups consisting of metals, metal oxides, metal sulfates, and combinations thereof.

47. A golf ball comprising:
a center;
a mantle; and
a cover layer, the center, the mantle, and the cover layer all having a specific gravity that is substantially identical;
wherein, the golf ball, when struck by a driver club at a clubhead velocity of about 160 feet-per-second, has an initial velocity off the clubhead of greater than about 240 feet-per-second.

48. The golf ball of claim 47, where the golf ball has a coefficient of restitution of greater than about 0.812 at a test velocity of about 150 feet-per-second.

49. The golf ball of claim 47, wherein the center has a diameter of less than about 1.25 inches.

50. The golf ball of claim 47, wherein the center has a diameter of less than about 1.125 inches.

51. The golf ball of claim 47, wherein the at least one intermediate layer(s) has a Shore D hardness as measured on the curved outer surface of the mantle, of between about 55 and about 62.

52. The golf ball of claim 47, wherein the mantle comprises a copolymer of ethylene and acrylic acid, wherein about 100% of the acid groups are neutralized with metal ions.

53. The golf ball of claim 52, wherein the at least one intermediate layer further comprises greater than about 5 parts per hundred of a fatty acid salt chosen from the group consisting of magnesium stearate and magnesium oleate.

54. The golf ball of claim 47, wherein the mantle comprises a terpolymer of ethylene, acrylic acid, and n-butyl acrylate, wherein about 100% of the acid groups are neutralized with metal ions.

55. The golf ball of claim 54, wherein the mantle further comprises greater than 5 parts per hundred of a fatty acid salt chosen from the group consisting of magnesium stearate and magnesium oleate.

56. The golf ball of claim 47, wherein the golf ball, when rotated in a solution of salt water of sufficient density to support the ball, exhibits no single preferred orientation.
